# EUROPEAN PATENT SPECIFICATION

(11) **EP 1 305 993 B1**
(45) Date of publication and mention of the grant of the patent: **20.12.2006**
(21) Application number: 02023992.7
(22) Date of filing: 25.10.2002
(51) Int. Cl.: A01D 34/86

(54) **Roadside mower**
Randstreifenmäher
Faucheuse pour accotements

(30) Priority: 25.10.2001 IT BO20010649
(43) Date of publication of application: 02.05.2003
(73) Proprietor: PROCOMAS S.R.L., 45036 Ficarolo (Rovigo) (IT)
(72) Inventor: Calza, Ivo, 45036 Ficarolo (Rovigo) (IT)
(74) Representative: Negrini, Elena

(56) References cited:
- DE-A1- 1 927 793
- DE-A1- 19 826 347
- GB-A- 1 250 950
- GB-A- 2 081 563
- US-A- 3 115 739
- US-A- 3 599 403
- US-A- 3 665 685

## Description

The present invention relates to the operating machine, particularly refers to operating machines supporting devices fit to mower the grass in correspondence of roadway edges in presence of obstacles of different dimensions.

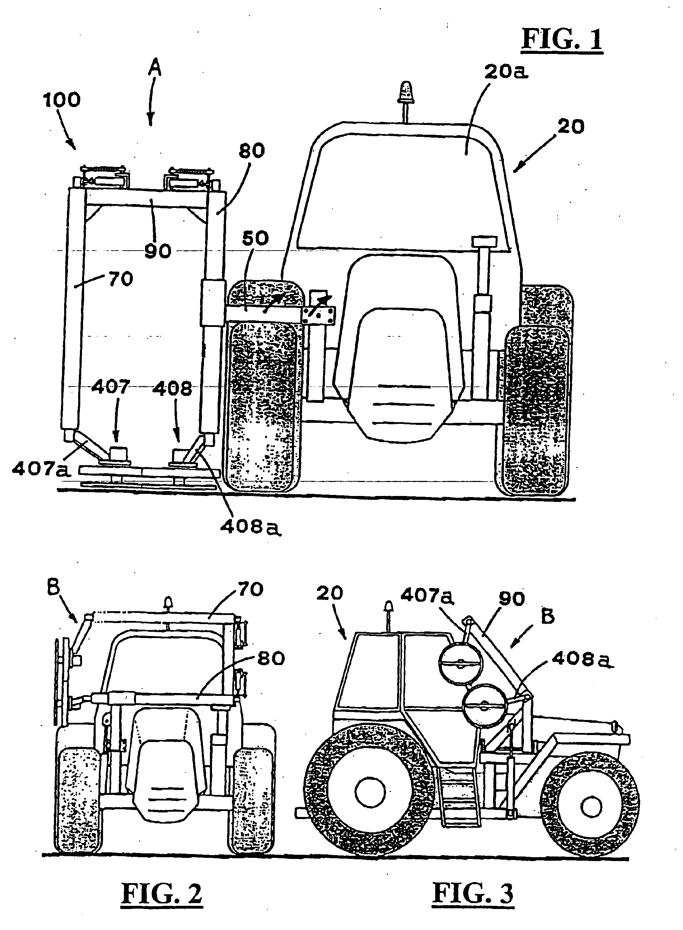

As shown in figures 1-3, the traditional known machines are constituted by a tractor 20, often consisting of an agricultural tractor, sideways provided with a lawn mower device 100 having, in correspondence of the roadway edges, a couple of cutting groups 407, 408, usually operated by the tractor hydraulic circuit, fit to operate over obstacles of reduced dimensions positioned along the working path.

For this object the lawn mower machine is advantageously provided with "passing over devices" including tracer points, generally operated by the main hydraulic circuit of the tractor, fit to sideways automatically move each cutting group 407, 408 when the latter contacts obstacles which could damage said cutting group and/or can be damaged by the latter, such as for instance guardrails, wayside stones, etc.

The classical structure of said traditional lawn mower device 100 provides a frame, substantially "U" reverse shaped, defining a couple of uprights, respectively external 70 ed internal 80, side by side and parallel, to which a joining traverse 90 is fixed.

Each upright, external 70 and internal 80, rotatably supports respective cutting edges 407, 408 by means of related swinging arms 407a, 408a supported by related operating shafts positioned inside the respective uprights 70, 80.

Occasionally said joining traverse 90 is extensible, in order to allow the adjustment of the mutual distance of the uprights 70, 80 rigidly fixed to said traverse.

The internal upright 80 of the traditional lawn mower device 100 interacts with an operating arm 50 provided by the tractor 20, fit to move the same lawn mower device 100 from an active configuration A, in which the device cut the grass at the roadway edges (figure 1), to a rest configuration B of minimum lateral encumbrance of the lawn mower device 100, in which the cutting groups 407, 408 are deactivated and retracted, for instance in front of the windshield 20a of the tractor 20 (figure 2, 3).

In correspondence of obstacles of reduced vertical extension, which can be positioned in correspondence of the roadway edges and which are beneath the joining traverse 90, without interfering with the latter, the cutting groups 407, 408 fit the obstacle profile, without stopping the cutting sequence, thank to the "passing over devices".

In correspondence of obstacles having a vertical extension almost equal to the height of the joining traverse 90 from the ground, the lawn mower device 100 according to the known prior art must necessarily stop the cutting sequence moving from the active condition A to the rest condition B.

In this way the cutting sequence is suspended until the obstacles is fully over passed, when the lawn mower device 100 move back to the active condition A for starting again cutting the grass at the roadway edges.

There is said inconvenience furthermore in all the cases in which the cutting sequence provides to position the lawn mower device 100 over an obstacle having ample longitudinal extension, such as guardrails or wayside stones. Thus the presence of several obstacles having relatively ample vertical extension causes a discontinuous cutting sequence, characterized by numerous interruptions and consequently deactivations of the cutting groups, broadening too much the working times and lowering the quality of the cut.

Some lawn mower devices according to the known art provide the external upright hinged to the joining traverse according an axis substantially parallel to said traverse. In such way the external upright can be backwards retracted and can assume intermediary configurations in which it can be positioned orthogonal to the operating plane defined by the traverse and the internal upright.

Nevertheless in proximity of obstacles having a vertical extension almost equal to the height from the ground of the joining traverse, the lawn mower device must necessarily stop the cutting sequence, moving to the rest position B.

Object of the present invention is to obviate the above-mentioned drawbacks in proposing a lawn mower device for operating machines, which can operate in proximity of obstacles having variable vertical extension without stopping the cutting sequence.

A further object of the present invention is to propose a lawn mower device guaranteeing a cutting sequence particularly fast and uniform for each configuration of the roadway edges object of maintenance.

Furthermore an object is to propose a lawn mower device assuring high standard of reliability and functionality in every functioning condition, independently of the obstacle shape and type.

The above-mentioned objects are achieved according to the content of the claims.

The characteristics of the invention are underlined in the following, in which it is described a preferred but not exclusive embodiment, with reference to attaches drawings, in which:
- figure 1 shows schematically a front view of an operating machine equipped with a lawn mower device according to the prior known art in an active condition in which the cutting groups cut the grass at the roadway edges;
- figures 2 and 3 show schematically, in reduced scale, corresponding front and lateral views of the figure 1 operating machine in which the lawn mower device is in a rest configuration in which the cutting groups are deactivated and positioned in front to the windshield of the operating machine;

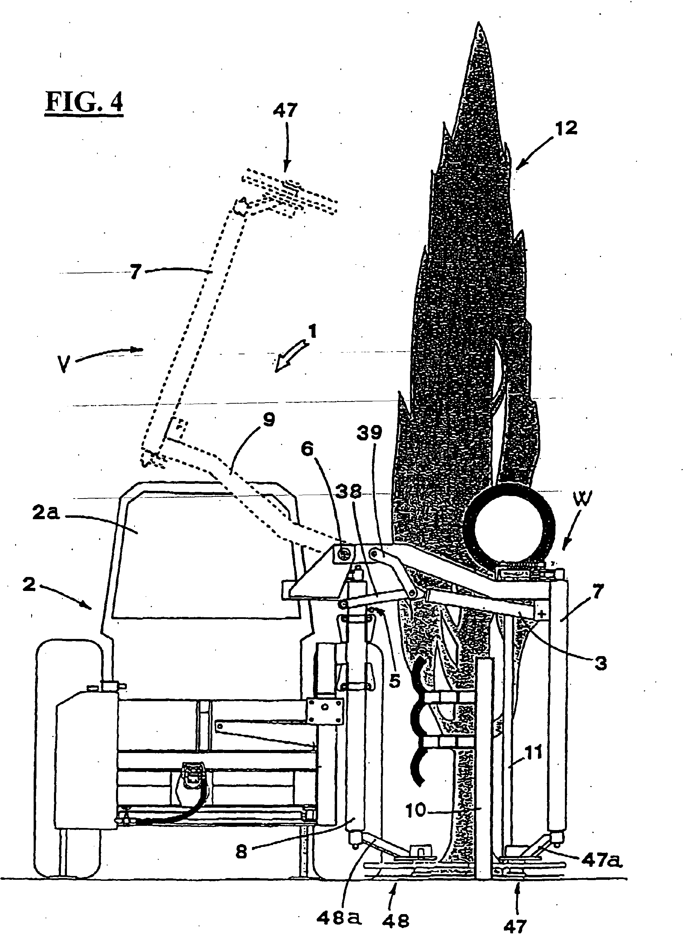

- figure 4 shows schematically a front view of an operating machine equipped with the lawn mower device object of the invention in two particularly significant operating configurations.

With reference to said figures, numeral 1 indicates the proposed lawn mower device removably sideways supported by the supporting structure of an operating machine 2, for instance a tractor.

The lawn mower device 1 object of the invention is fundamentally constituted by a "U" reverse shaped frame, defining a couple of uprights, respectively external 7 ed internal 8, to which a joining traverse 90 is orthogonally fixed.

According to known ways, each upright, external 7 and internal 8, rotatably supports a respective cutting group 47, 48 fit to cut the grass in correspondence to the roadway edges, by means of a related swinging arm 47a, 48a supported by a related operating shaft positioned inside the upright 7, 8.

The joining traverse 9 is rigidly fixed to the external upright 7, while the internal upright 8 is hinged to said traverse in correspondence of an operating hinge 6 having axis orthogonal to the planed defined by the uprights 7, 8 and the traverse 9.

The joining traverse 9 defines in combination with the corresponding uprights 7, 8 a plane substantially orthogonal to the advancement direction of the tractor 2.

A jack 3, for instance of hydraulic type, associated to the internal upright 8 and to the joining traverse 9 - external upright 7 group, allows the mutual relative rigid rotation with respect to operating hinge 6.

The joining traverse 9 - external upright 7 group is thus moved by said jack 3 from an operating configuration W, in which the uprights 7, 8 are side by side and substantially parallel, and the corresponding cutting groups 47, 48 cut the grass in proximity of the roadway edges, to an raised configuration V, where the external upright 7 is positioned above the respective internal upright 8, at the opposite part with respect to the latter, with the corresponding cutting group 47 excluded for safety reasons.

In the embodiment shown in figure 4, an end of the jack 3 is hinged to a couple of first 38 and second 39 bars, which are hinged at the opposed side respectively to the internal upright 8 and to the joining traverse 9.

The remaining end of the jack 3 is hinged to the joining traverse 9 - external upright 7 group in such a way to allow its correct transition from the operating configuration W to the raised condition V.

In proximity of the roadway edges there are a large number of obstacles, such as for instance guardrails 10, vertical signalization 11, trees 12, etc. which obstruct the grass cutting.

In correspondence of each cutting group 47, 48 it is provided a tracer point member fit to sense the presence of obstacles in proximity of the latter and fit to automatically rotates the corresponding operating shaft of the related cutting group 47, 48 in such a way to not damage the obstacles and to cut the grass in their proximity.

The cutting groups 47, 48 are rotatably supported by the corresponding swinging arms 47a, 48a in order to cut the grass in proximity of obstacles at the roadway edges, and avoiding the lawn mower device damaging the obstacles and/or be damaged by these last ones.

The proposed lawn mower device further provides a microswitch 5, supported by the internal upright 8, which detects the relative position of the joining traverse 9 with respect to said upright and excludes the cutting group 47 supported by the external upright 7.

In the operating configuration W the cutting groups 47, 48 cut the grass at the roadway edges, so defining a predefined cutting width of the lawn mower device 1.

In correspondence of an obstacle having reduced vertical extension, namely such to be under the lawn mower device 1 in the operating configuration W, such as for instance a guardrail 10, the cutting groups 47, 48 operate over the latter fitting the profile defined by the uprights constituting the guardrail, thank to the presence of the swinging arms supporting said cutting groups 47, 48 and the presence of the tracer point members. This allows to correctly cut the grass both internally and externally to the guardrail 10 with respect to the roadway, as evidently shown in figure 4.

In correspondence of an obstacle having large vertical extension, namely unable to be under the lawn mower device 1 in the operating configuration W, such as for instance a vertical signalization 11 or a tree 12, the tractor diver visually detects the latter, then in its correspondence stops the tractor 2 and manually operates the jack 3.

In this way it is imposed the removal rotation of the joining traverse 9 - external upright 7 group from the operating configuration W up to the raised configuration V in correspondence of which the tractor 2 restarts moving and it is possible to go on cutting the grass by means of the cutting group 48 supported by the internal upright 8, while the cutting group 47 supported by the external upright 7 is excluded by the microswitch 5.

When the obstacle 11, 12 is over passed the tractor 2 is again stopped and the driver manually operates the jack 3 for rotating the joining traverse 9 - external upright 7 group from the raised configuration V up to reach the operating configuration W, in correspondence of which the tractor 2 restarts moving and the cutting group 47, supported by the external upright 7, is operated again whit the consent of the microswitch 5.

In the operating configuration W both the cutting groups 47, 48 are operated and they cut the grass in proximity of the roadway edges. In such a way it is possible to cut the grass in correspondence of obstacles with large vertical extension, at least in the internal region of the roadway, in proximity of the internal upright 8 of the lawn mower device 1.

During the inoperative phase of the lawn mower device 1, with the cutting groups 47, 48 excluded and the tractor 2, which is stopped or transfer moves, it is possible to provide the positioning of said lawn mower device 1 in front of the windshield 2a of the tractor 2 or at the back of said windshield 2a.

For this purpose the internal upright 8 is laterally supported by the supporting structure of the tractor 2 by means of a hinge which with the joining traverse 9 - external upright 7 group in operating configuration W, by means of a suitable operating circuit, allows the overturning of the lawn mower device 1 of an almost right angle, to position said device transversally to the tractor 2, in front or at the back of the windshield 2a.

According to another interesting embodiment, the joining traverse 9 can be hinged to the external upright 7, with respect to which it can assume different configurations.

The lawn mower device object of the invention consequently allows advantageously operating in correspondence of obstacles having variable vertical extension, without fully stopping the cutting sequence.

The possibility to rotate the joining traverse 9 - external upright 7 group from the operating configuration to the raised configuration every time it is necessary to operate in proximity of obstacles with large vertical extension, allows to not change the tractor running, so guaranteeing a cutting sequence particularly fast and uniform for each configuration of the roadway edges subject to maintenance.

The above-mentioned advantages are been achieved by means of an easy concept technical solution, particularly functional and reliable independently of the obstacle shape and type.

## Claims

1. Lawn mower device for operating machines, of the type constituted by an "U" reverse shaped frame, defining a couple of uprights, respectively external (7) and internal (8), each upright (7,8) rotatably supporting respective cutting groups (47, 48) fit to cut the grass in correspondence to the roadway edges, to which at the top a joining traverse (9) is associated; with internal upright (8) removably supported by the supporting structure of said operating machine (2), and said cutting groups (47, 48) supported by corresponding swinging arms (47a, 48a) held on by related operating shafts positioned inside said uprights (7, 8); said device being **characterized in that** provides: an operating hinge (6) having an axis substantially orthogonal to the planed defined by said uprights (7, 8) and said traverse (9) and fit to allow the relative rotation of said joining traverse (9) with respect to said internal upright (8); actuator members (3), associated at least to said internal upright (8) and at least to said assembly traverse (9), fit to rigidly rotates said joining traverse (9) and external upright (7) group with respect to said internal upright (8), from an operating configuration (W), in which said internal (8) and external (7) uprights are side by side almost parallel and the corresponding cutting groups (47, 48) cut the grass in correspondence of the roadway edges, to a raised configuration (V), in which said external upright (7) is positioned over the respective internal upright (8), at the opposite part thereof.

2. Lawn mower device according to claim 1 **characterized in that** said joining traverse (9) is rigidly fixed to said external upright (7), with respect to which is hold substantially orthogonal.

3. Lawn mower device according to claim 1 or 2 **characterized in that** provides in correspondence of each cutting group (47, 48) at least a tracer point member fit to detect the presence of obstacles in its proximity and to automatically rotate the corresponding operating shaft of said cutting group (47, 48), in such a way to not damage said obstacles and to cut the grass in proximity of said obstacles.

4. Lawn mower device according to any of the preceding claims **characterized in that** provides a microswitch (5), supported by the above mentioned internal upright (8), fit to detect la relative rotation of said joining traverse (9) with respect to said internal upright (8) and to exclude at least the cutting group (47), rotatably supported by said external upright (7).

5. Lawn mower device according to any of the preceding claims **characterized in that** said actuator members (3) are constituted by at least a hydraulic jack.

6. Lawn mower device according to claim 5 **characterized in that** provides at least a couple of first (38) and second (39) bars, each hinged at one side to a shared end of said jack (3) and at the opposed side respectively to said internal upright (8) and to said joining traverse (9), with the remaining end of said jack (3) hinged to said joining traverse (9) - external upright (7) group.

7. Lawn mower device according to any of the preceding claims **characterized in that** said internal upright (8) is laterally supported by said operating machine (2) by means of an hinge which, with said joining traverse (9) in the operating configuration (W), allows to overturn said lawn mower device (1) of an almost right angle, to position the device in front of the windshield (2a) of the operating machine (2), or at the back.

8. Lawn mower device according to claim 1 **characterized in that** said joining traverse (9) is hinged to said external upright (7) and can assume variable configurations with respect to said upright (7).

9. Lawn mower device according to claim 1 **characterized in that** in said operating configuration (W) of said joining traverse (9), the latter defines in combination with said internal (8) and external (7) uprights a plane almost orthogonal to the advancement direction of the operating machine (2).

10. Lawn mower device according to claim 1 **characterized in that** in said actuator members (3), fit to move said joining traverse (9) - external upright (7) group from said operating configuration (W) to said raised configuration (V), are manually operated.

## Patentansprüche

1. Rasenmähvorrichtung für Arbeitsmaschinen eines Typs, der von einem Rahmen in der Form eines umgedrehten U gebildet wird, welcher ein Paar von Pfosten aufweist, nämlich einen äußeren Pfosten (7) und einen inneren Pfosten (8), die jeweils entsprechende Schneidgruppen (47, 48) drehbar lagern, die das Gras entsprechend den Straßenrändern schneiden, und denen am oberen Ende eine Verbindungstraverse (9) zugeordnet ist, wobei der innere Pfosten (8) von der Lagerkonstruktion der Arbeitsmaschine (2) lösbar gelagert wird und die Schneidgruppen (47, 48) von entsprechenden Schwenkarmen (47a, 48a) gelagert werden, welche von entsprechenden Betätigungswellen gehalten werden, die innerhalb der Pfosten (7, 8) angeordnet sind, **dadurch gekennzeichnet, dass** die Vorrichtung ein Scharnier (6), das eine Achse aufweist, die im wesentlichen senkrecht zu der von den Pfosten (7, 8) und der Traverse (9) gebildeten Ebene verläuft, und das eine Drehung der Verbindungstraverse (9) relativ zum inneren Pfosten (8) ermöglicht, und Betätigungselemente (3) umfasst, die mindestens dem inneren Pfosten (8) und mindestens der Montagetraverse (9) zugeordnet sind und die Gruppe aus der Verbindungstraverse (9) und dem äußeren Pfosten (7) relativ zum inneren Pfosten (8) aus einer Betriebskonfiguration (W), in der der innere Pfosten (8) und der äußere Pfosten (7) Seite an Seite nahezu parallel angeordnet sind und die entsprechenden Schneidgruppen (47, 48) das Gras entsprechend den Straßenrändern schneiden, in eine angehobene Konfiguration (V), in der der äußere Pfosten (7) über dem entsprechenden inneren Pfosten (8) am gegenüberliegenden Teil angeordnet ist, drehen.

2. Rasenmähvorrichtung nach Anspruch 1, **dadurch gekennzeichnet, dass** die Verbindungstraverse (9) starr am äußeren Pfosten (7) befestigt ist und relativ zu diesem im Wesentlichen senkrecht gehalten wird.

3. Rasenmähvorrichtung nach Anspruch 1 oder 2, **dadurch gekennzeichnet, dass** entsprechend einer jeden Schneidgruppe (47, 48) mindestens ein Abtastelement vorgesehen ist, das das Vorhandensein von Hindernissen in seiner Nachbarschaft detektiert und die entsprechende Betätigungswelle der Schneidgruppe (47, 48) automatisch so dreht, dass die Hindernisse nicht beschädigt werden und das Gras in der Nachbarschaft der Hindernisse geschnitten wird.

4. Rasenmähvorrichtung nach einem der vorangehenden Ansprüche, **dadurch gekennzeichnet, dass** sie einen Mikroschalter (5) aufweist, der vom vorstehend erwähnten inneren Pfosten (8) gelagert wird und die Relativdrehung der Verbindungstraverse (9) zum inneren Pfosten (8) detektiert und mindestens die Schneidgruppe (47), die vom äußeren Pfosten (7) drehbar gelagert wird, ausschließt.

5. Rasenmähvorrichtung nach einem der vorangehenden Ansprüche, **dadurch gekennzeichnet, dass** die Betätigungselemente (3) von mindestens einer hydraulischen Hubvorrichtung gebildet werden.

6. Rasenmähvorrichtung nach Anspruch 5, **dadurch gekennzeichnet, dass** sie mindestens ein Paar von ersten (38) und zweiten (39) Stangen aufweist, die jeweils an einer Seite an ein Ende der Hubvorrichtung (3) und auf der gegenüberliegenden Seite an den inneren Pfosten (8) und die Verbindungstraverse (9) angelenkt sind, während das verbleibende Ende der Hubvorrichtung (3) mit der Gruppe aus der Verbindungstraverse (9) und dem äußeren Pfosten gelenkig verbunden ist.

7. Rasenmähvorrichtung nach einem der vorangehenden Ansprüche, **dadurch gekennzeichnet, dass** der innere Pfosten (8) von der Arbeitsmaschine (2) mit Hilfe eines Scharniers seitlich gelagert wird, das, wenn sich die Verbindungstraverse (9) in der Betriebskonfiguration (W) befindet, eine Drehung der Rasenmähvorrichtung (1) unter nahezu einem rechten Winkel ermöglicht, um die Vorrichtung vor der Windschutzscheibe (2a) der Arbeitsmaschine (2) oder an der Rückseite derselben anzuordnen.

8. Rasenmähvorrichtung nach Anspruch 1, **dadurch gekennzeichnet, dass** die Verbindungstraverse (9) am äußeren Pfosten (7) gelenkig gelagert ist und in Bezug auf den Pfosten (7) veränderliche Konfigurationen einnehmen kann.

9. Rasenmähvorrichtung nach Anspruch 1, **dadurch gekennzeichnet, dass** in der Betriebskonfiguration (W) der Verbindungstraverse (9) diese in Verbindung mit dem inneren Pfosten (8) und dem äußeren Pfosten (7) eine Ebene bildet, die nahezu senkrecht zur Vorschubrichtung der Arbeitsmaschine (2) verläuft.

10. Rasenmähvorrichtung nach Anspruch 1, **dadurch gekennzeichnet, dass** die Betätigungselemente (3), die die Gruppe aus der Verbindungstraverse (9) und dem äußeren Pfosten (7) aus der Betriebskonfiguration (W) in die angehobene Konfiguration (V) bewegen, manuell betätigt werden.

## Revendications

1. Faucheuse pour machines opérationnelles, du type constitué par un cadre en forme de « U » inversé, définissant un couple de montants, respectivement externe (7) et interne (8), chaque montant (7, 8) supportant en rotation des groupes de coupe (47, 48) respectifs adaptés pour couper l'herbe en fonction des accotements de chaussée, auxquels une traverse de jonction (9) est associée au niveau de la partie supérieure ; le montant interne (8) étant supporté de manière amovible par la structure de support de ladite machine opérationnelle (2), et lesdits groupes de coupe (47, 48) étant supportés par des bras oscillants (47a, 48a) correspondants maintenus par des arbres de commande associés positionnés à l'intérieur desdits montants (7, 8) ; ladite faucheuse étant **caractérisée en ce qu'**elle fournit : une charnière opérationnelle (6) présentant un axe sensiblement orthogonal au plan défini par lesdits montants (7, 8) et ladite traverse (9) et adaptée pour permettre la rotation relative de ladite traverse de jonction (9) par rapport au dit montant interne (8) ; des éléments actionneurs (3), associés au moins au dit montant interne (8) et au moins à ladite traverse d'ensemble (9), adaptés pour amener rigidement en rotation ledit groupe formé par la traverse de jonction (9) et le montant externe (7) par rapport au dit montant interne (8), d'une configuration opérationnelle (W), dans laquelle lesdits montant interne (8) et externe (7) sont côte à côte et presque parallèles et les groupes de coupe (47, 48) correspondants coupent l'herbe en fonction des accotements de la chaussée, vers une configuration surélevée (V), dans laquelle ledit montant externe (7) est positionné au-dessus du montant interne (8) respectif, au niveau de la partie opposée de celui-ci.

2. Faucheuse selon la revendication 1, **caractérisée en ce que** ladite traverse de jonction (9) est fixée rigidement au dit montant externe (7), par rapport auquel elle est maintenue sensiblement orthogonalement.

3. Faucheuse selon la revendication 1 ou 2, **caractérisée en ce qu'**elle fournit en fonction de chaque groupe de coupe (47, 48) au moins un élément de pilote de rapporteur adapté pour détecter la présence d'obstacles dans sa proximité et pour amener automatiquement en rotation l'arbre de commande correspondant dudit groupe de coupe (47, 48), de manière à ne pas endommager lesdits obstacles et à couper l'herbe à proximité desdits obstacles.

4. Faucheuse selon l'une quelconque des revendications précédentes, **caractérisée en ce qu'**elle fournit un microrupteur (5), supporté par le montant interne (8) mentionné ci-dessus, adapté pour détecter une rotation relative de ladite traverse de jonction (9) par rapport au dit montant interne (8) et pour exclure au moins le groupe de coupe (47), supporté en rotation par ledit montant externe (7).

5. Faucheuse selon l'une quelconque des revendications précédentes, **caractérisée en ce que** lesdits éléments actionneurs (3) sont constitués par au moins un vérin hydraulique.

6. Faucheuse selon la revendication 5, **caractérisée en ce qu'**elle fournit au moins un couple de première (38) et seconde (39) barres, chacune étant articulée au niveau d'un côté sur une extrémité partagée dudit vérin (3) et sur le côté opposé respectivement sur ledit montant interne (8) et sur ladite traverse de jonction (9), l'extrémité restante dudit vérin (3) étant articulée sur ledit groupe traverse de jonction (9) - montant externe (7).

7. Faucheuse selon l'une quelconque des revendications précédentes, **caractérisée en ce que** ledit montant interne (8) est supporté latéralement par ladite machine opérationnelle (2) au moyen d'une charnière qui, avec ladite traverse de jonction (9) dans la configuration opérationnelle (W), permet de faire basculer ladite faucheuse (1) d'un angle presque droit, pour positionner la faucheuse à l'avant du pare-brise (2a) de la machine opérationnelle (2), ou à l'arrière.

8. Faucheuse selon la revendication 1, **caractérisée en ce que** ladite traverse jonction (9) est articulée sur ledit montant externe (7) et peut prendre diverses configurations par rapport au dit montant (7).

9. Faucheuse selon la revendication 1, **caractérisée en ce que** dans ladite configuration opérationnelle (W) de ladite traverse de jonction (9), celle-ci définit en combinaison avec lesdits montants interne (8) et externe (7) un plan presque orthogonal à la direction d'avancement de la machine opérationnelle (2).

10. Faucheuse selon la revendication 1, **caractérisée en ce que** lesdits éléments actionneurs (3), adaptés pour déplacer ledit groupe traverse de jonction (9) - montant externe (7) de ladite configuration opérationnelle (W) à ladite configuration surélevée (V), sont actionnés manuellement.
